# EUROPEAN PATENT APPLICATION

(11) **EP 2 226 203 A1**
(43) Date of publication of application: **08.09.2010**
(21) Application number: 08867866.9
(22) Date of filing: 26.12.2008
(51) Int. Cl.: B60C 5/00, B60B 21/00, B60B 21/12, B60C 5/02, B60C 5/04, B60C 5/22, B60C 11/02

(54) **TIRE AND TIRE-RIM ASSEMBLY**

(30) Priority: 27.12.2007 JP 2007338030; 27.12.2007 JP 2007338090
(71) Applicant: Bridgestone Corporation, Tokyo 104-8340 (JP)
(72) Inventor: SAKAI, Keiichi, Kodaira-shi Tokyo 187-8531 (JP); ABE, Akihiko, Kodaira-shi Tokyo 187-8531 (JP)
(74) Representative: Oxley, Robin John George
(86) International application number: PCT/JP2008/073799
(87) International publication number: WO 2009/084660

(57) **Abstract**

A tire which is adapted to be mounted on a rim, and which includes: a tube body which is made of a thermoplastic material and is adapted to be fit on an outer peripheral section of the rim; and a tread provided in an outer side of the tube body, in which the tube body is fixed to the outer peripheral section of the rim in a close contact manner with positive gas pressure inside the tube body.

## Description

### TECHNICAL FIELD

The present invention relates to a tire and a tire-rim assembly.
Priority is claimed on Japanese Patent Applications No. 2007-338030, filed December 27, 2007, and No. 2007-338090, filed December 27, 2007, the contents of which are incorporated herein by reference.

### BACKGROUND ART

As illustrated in the following Patent Document 1, for example, a reinforcing member, such as a bead core or a belt layer, having organic fiber, steel cord or other material, is embedded in vulcanized rubber in related art tires.
[Patent Document 1] Japanese Unexamined Patent Application, First Publication No. H6-255305

### DISCLOSURE OF THE INVENTION

### PROBLEMS TO BE SOLVED BY THE INVENTION

However, in the related art tire, since the reinforcing member is provided in the vulcanized rubber, the tire has a complicated structure and thus it is difficult to reduce the manufacturing cost. In addition, the related art tire is heavy and thus assembling or disassembling the rim is sometimes difficult.

The invention was devised in view of the above circumstances, and has as an object the provision of a tire and a tire-rim assembly which have simplified structures and improved workability when assembling or disassembling the rim.

### MEANS FOR SOLVING THE PROBLEMS

In order to solve the aforementioned problems and to achieve the aforementioned object, a tire according to the present invention is a tire which is adapted to be mounted on a rim, and which includes: a tube body which is made of a thermoplastic material and is adapted to be fit on an outer peripheral section of the rim; and a tread provided in an outer side of the tube body, in which the tube body is fixed to the outer peripheral section of the rim in a close contact manner with positive gas pressure inside the tube body.
According to the present invention, the tire is constituted of the tread and the tube body, and the tube body is made of a thermoplastic material. With this configuration, a tire of simplified structure can be provided, the manufacturing cost can be reduced, and the weight of the tire can be reduced. If a reinforcing member having organic fiber, steel cord or other material is not embedded inside the tube body, the structure can be further simplified, the manufacturing cost can be further reduced, and the weight can be further reduced.
When a bead core among reinforcing members is embedded in the tube body, it is necessary to apply greater force to the tube body in order to significantly deform the bead section forcibly during assembly or disassembly of the rim. In this case, since the thermoplastic materials have higher stiffness and lower elastic limit strain as compared to vulcanized rubber, there is a possibility that the tube body might be damaged. Such a problem can be solved when no reinforcing member is embedded, which can also improve the workability of assembling or disassembling the rim.
If the tube body is made of a thermoplastic elastomer among thermoplastic materials, a decrease in the stiffness of the tire can be avoided even if no reinforcing member is used. Thus, the practical usability can reliably be provided.

Here, the tread may be formed as an endless belt and is removably fit onto the outer side of the tube body.
In this case, only one of the tread and the tube body can be replaced in the event of wear or deterioration. In this manner, efficient replacement can be achieved and the cost required for the replacement can be reduced.
If no reinforcing member is embedded inside the tube body, there is no need to remove other members from the tube body after the tube body and the tread are separated from each other. Since the tube body is made of a thermoplastic material, the tube body can be re-molded only by heating and fusing. Thus, the tire can be provided with excellent recycling efficiency.

A first engaging portion may be provided in an outer peripheral section of the tube body, a second engaging portion may be provided in an inner circumferential surface of the tread, and the first engaging portion and the second engaging portion may be adapted to be engaged with each other to prevent relative misalignment of the tube body with respect to the tread in at least a width direction of the tire.
In this case in which the first and second engaging portions are provided, the tendency of relative misalignment of the tube body with respect to the tread in the width direction of the tire can be eliminated even when the tube body and the tread are constructed to be separated from each other as described above, and thus the practical usability can be reliably further provided.
With the thus-provided first and second engaging portions, the relative position of the tread with respect to the tube body in the width direction of the tire can be determined easily and highly accurately when the tread is fit onto the outer side of the tube body. Thus, the workability when assembling the rim or when assembling the tire can be further improved.
In tires having the related art tube body, the tube body itself does not directly receive force from the road surface. In the tire of the present invention, however, since the tube body directly receives force from the road surface, it is necessary to prevent relative displacement of the tube body with respect to the rim and the tread in the circumferential direction and the width direction of the tire. With the thus-provided first and second engaging portions, the relative displacement can be prevented sufficiently.

In this configuration, the first engaging portion provided in the tube body may be a projection and the second engaging portion provided in the tread may be a recess, and the first engaging portion may be fit into the second engaging portion with positive gas pressure inside the tube body.
In this case, forced entrance of the first engaging portion into the second engaging portion can be easily achieved due to expansion of the tube body with the positive gas pressure and thus it is possible to securely engage the first engaging portion and the second engaging portion with each other.
In this configuration, the first engaging portions may be solid projections.
In this case, dimensional variety of the first engaging portions due to expansion of the tube body with the positive gas pressure, such as a varying projection height from tube body and a varying width, can be eliminated, and the first engaging portion can be made to reliably advance to the second engaging portion.

The tread may include a reinforcing layer.
The tube body may be made of a thermoplastic material having a longitudinal elastic modulus of not less than 1.0 MPa and not more than 500 MPa.
In these cases, a decrease in the stiffness of the tire when no reinforcing member is provided can be avoided reliably. Note that there is a possibility that the tube body with a longitudinal elastic modulus of more than 500 MPa might reduce riding comfort.

A tire-rim assembly according to a first aspect of the present invention is a tire-rim assembly which includes a rim and the tire according to the present invention which is mounted on the rim, in which a vertical cross-sectional configuration, taken along the width direction of the tire, of a support surface of an outer peripheral section of the rim on which an inner peripheral section of the tube body is supported is a circular arc shape which conforms to a vertical cross-sectional configuration of the inner peripheral section of the tube body.
In this case, misalignment of the tube body with respect to the rim in the width direction of the tire can be avoided. It is also possible to easily determine the position of the tube body with respect to the rim in the width direction of the tire when the tube body is fit onto the support surface of the rim. Such a configuration provides improved workability when assembling the rim.

Here, a third engaging portion may be provided in the support surface of the rim; a fourth engaging portion may be provided in the inner peripheral section of the tube body; and the third engaging portion and the fourth engaging portion may be adapted to be engaged with each other to prevent misalignment of the tube body with respect to the rim in at least a width direction of the tire.
In this case, even if no bead core is provided, the tendency of misalignment of the tube body with respect to the rim in the width direction of the tire can be eliminated, and thus the practical usability can be reliably further provided.
Further, with the thus-provided third and fourth engaging portions, it is possible to easily and highly accurately determine the position of the tube body with respect to the rim in the width direction of the tire when the tube body is fit onto the support surface of the rim, thereby further improving the workability when assembling the rim.
In the tire of the invention, since the tube body directly receives force from the road surface, it is necessary to prevent relative displacement of the tube body with respect to the rim and the tread in the circumferential direction and the width direction of the tire. With the thus-provided third and fourth engaging portions, the relative displacement can be prevented sufficiently.

The fourth engaging portion provided in the tube body may be a projection and the third engaging portion provided in the rim may be a recess; and the fourth engaging portion may be fit into the third engaging portion with positive gas pressure inside the tube body.
In this case, forced entrance of the fourth engaging portion into the third engaging portion can be easily achieved due to expansion of the tube body with the positive gas pressure and thus it is possible to securely engage the fourth engaging portion and the third engaging portion with each other.
In this configuration, the fourth engaging portion may be solid projections.
In this case, dimensional variety of the fourth engaging portions due to expansion of the tube body with the positive gas pressure, such as a varying projection height from tube body and a varying width, can be eliminated and the fourth engaging portion can be made to reliably enter the third engaging portion.

A plurality of tube bodies may be provided so as to be arranged in the width direction of the tire; and the tread may be provided over the outer sides of the plurality of tube bodies in the width direction of the tire.
In this case in which the plurality of tube bodies are provided, even if some of the tube bodies are punctured due to, for example, vibration during travel or a locally applied large external force, the remaining tube bodies can support the load of the vehicle and thus the vehicle can continuously travel for a certain distance. That is, run-flat travel of the tire can be achieved.
In recent years, studies have been made on forming tires from thermoplastic materials to meet the demand for low-fuel consumption tires. There is concern about decreases in durability, such as an easy occurrence of puncture, about these lightweight tires.
In the invention, however, since run-flat travel can be achieved as described above, safety is secured reliably.

The plurality of tube bodies may be fit onto the outer peripheral section of the rim at certain intervals in the width direction of the tire.
In this case, the plurality of tube bodies are fit onto the outer peripheral section of the rim at certain intervals and the adjacent tube bodies are not in contact with each other in the width direction of the tire. Thus, it is possible to avoid wear of these tube bodies due to vibration during travel, thereby providing the tube bodies with excellent durability.

A tire-rim assembly according to a second aspect of the invention is a tire-rim assembly which includes a rim and the tire according to the present invention which is mounted on the rim, in which: a plurality of recessed portions are formed on a support surface of an outer peripheral section of the rim on which inner peripheral sections of the plurality of tube bodies are supported, the plurality of recessed portions being arranged in the width direction of the tire, and having vertical cross-sectional configurations, taken along the width direction of the tire, which conform to vertical cross-sectional configurations of the inner peripheral sections of the plurality of tube bodies; and the plurality of tube bodies are fit into the plurality of recessed portions, respectively.
In this case, since the plurality of recessed portions are formed on the support surface of the rim, misalignment of each of the tube bodies with respect to the rim in the 5 width direction of the tire can be avoided. It is also possible to easily determine the positions of the tube bodies with respect to the rim in the width direction of the tire when the tube bodies are fit onto the recessed portions. Such a configuration provides improved workability when assembling the rim.

Here, third engaging portions may be provided in each of the plurality of recessed portions; fourth engaging portions may be provided in each of the inner peripheral sections of the plurality of tube bodies; and the third engaging portions and the fourth engaging portions may be adapted to be engaged with each other to prevent relative misalignment of the plurality of tube bodies with respect to the rim in at least the width direction of the tire.
In this case, even if no bead core is provided, the tendency of misalignment of the tube bodies with respect to the rim in the width direction of the tire can be eliminated, and thus the practical usability can be reliably further provided.
With the thus-provided third and fourth engaging portions, it is possible to easily and highly accurately determine the positions of the tube bodies with respect to the rim in the width direction of the tire when the tube bodies are fit onto the recessed portions, thereby further improving the workability when assembling the rim.
In tires having the related art tube body, the tube body itself does not directly receive force from the road surface. In the tire of the invention, however, since the tube body directly receives force from the road surface, it is necessary to prevent relative displacement of the tube bodies with respect to the rim and the tread in the circumferential direction and the width direction of the tire. With the thus-provided third and fourth engaging portions, the relative displacement can be prevented sufficiently.

In this configuration, the fourth engaging portions provided in the plurality of tube bodies may be projections and the third engaging portions provided in the plurality of recessed portions may be recesses; and the fourth engaging portions may be fit into the third engaging portions with positive gas pressure inside the plurality of tube bodies.
In this case, forced entrance of the fourth engaging portions into the third engaging portions can be easily achieved due to expansion of the tube bodies with the positive gas pressure and thus it is possible to securely engage the fourth engaging portions and the third engaging portions with each other.
In this configuration, the fourth engaging portions may be solid projections.
In this case, dimensional variety of the fourth engaging portions due to expansion of the tube bodies with the positive gas pressure, such as a varying projection height from tube bodies and a varying width, can be eliminated and the fourth engaging portions can be made to reliably enter the third engaging portions.

### ADVANTAGEOUS EFFECTS OF THE INVENTION

According to the present invention, a tire and a tire-rim assembly with simplified structures and improved workability when assembling or disassembling the rim can be provided. The tire and the tire-rim assembly can be replaced efficiently and have excellent recycling efficiency.

### BRIEF DESCRIPTION OF THE DRAWINGS

FIG. 1 is an exploded perspective view of a tire-rim assembly according to a first embodiment of the invention.
FIG. 2 is a perspective view of the tire-rim assembly of FIG. 1 illustrating a cross section along a width direction of the tire.
FIG. 3 is an exploded perspective view of a tire-rim assembly according to a second embodiment of the invention.
FIG. 4 is a perspective view of the tire-rim assembly of FIG. 3 illustrating a cross section along a width direction of the tire.

### DESCRIPTION OF THE REFERENCE SYMBOLS

- 1:: TIRE-RIM ASSEMBLY
- 10:: RIM
- 12:: SUPPORT PORTION (OUTER PERIPHERAL SECTION)
- 12a:: SUPPORT SURFACE
- 20:: TIRE
- 21:: TUBE BODY
- 22:: TREAD
- 22a:: REINFORCING LAYER
- 23:: FIRST ENGAGING PORTION
- 24:: SECOND ENGAGING PORTION
- 25:: THIRD ENGAGING PORTION
- 26:: FOURTH ENGAGING PORTION
- 100:: TIRE-RIM ASSEMBLY
- 110:: RIM
- 112:: SUPPORT PORTION (OUTER PERIPHERAL SECTION)
- 112a:: SUPPORT SURFACE
- 112b:: RECESSED PORTION
- 120:: TIRE
- 121 to 123:: TUBE BODY
- 124:: FIRST ENGAGING PORTION
- 125:: SECOND ENGAGING PORTION
- 126:: THIRD ENGAGING PORTION
- 127:: FOURTH ENGAGING PORTION
- 128:: TREAD
- 128a:: REINFORCING LAYER
- H:: TIRE WIDTH DIRECTION

### BEST MODE FOR CARRYING OUT THE INVENTION

### <First Embodiment>

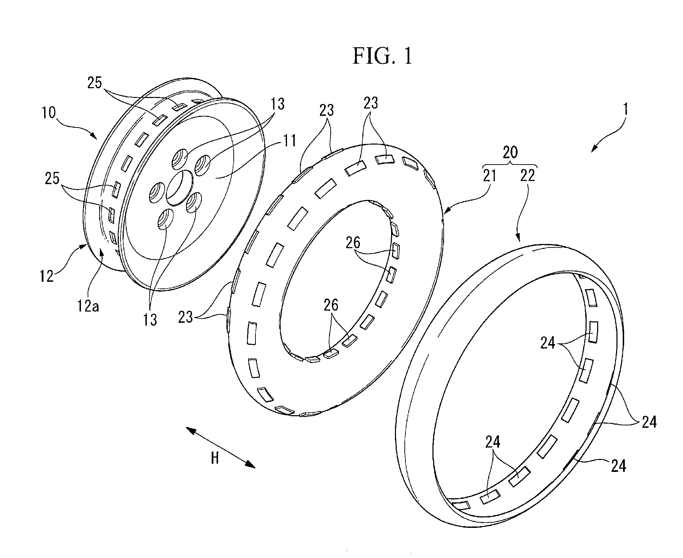

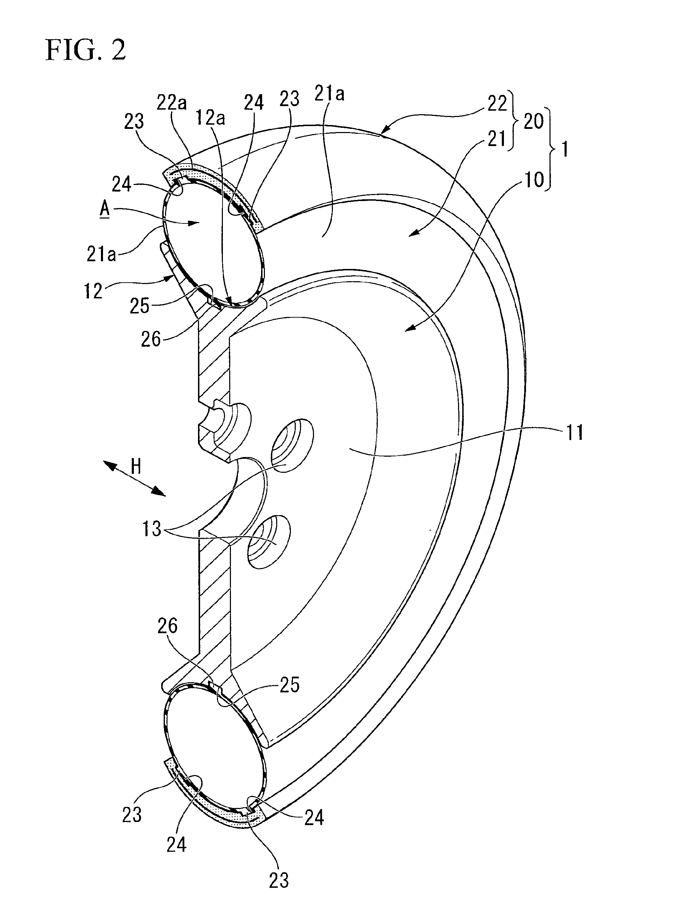

Hereinafter, a first embodiment of a tire-rim assembly according to the invention will be described with reference to FIGS. 1 and 2.
A tire-rim assembly 1 includes a disc-shaped rim 10 and a tire 20 mounted on a support portion (outer peripheral section) 12 of the rim 10 which will be described later. The rim 10 and the tire 20 are disposed coaxially with a common shaft extending along a tire width direction H.

The rim 10 includes a disc-shaped rim body 11 and the support portion 12 connected to an outer circumferential surface of the rim body 11. The support portion 12 has a V-shaped vertical cross-sectional configuration taken along the tire width direction H, which opens outward in the radial direction of the tire. The rim body 11 and the support portion 12 are integrally made of a metallic material. A plurality of insertion holes 13 are formed at the central portion, in the radial direction, of the rim body 11 for assembling the rim 10 to a wheel axis, which is not illustrated.
Here, in the support portion 12, a support surface 12a, i.e., both surfaces facing inward in the tire width direction H and a bottom surface which connects these surfaces, is formed in the shape of a smoothly continuing circular arc when seen in a vertical cross-sectional view taken along the tire width direction H. The support surface 12a conforms to the vertical cross-sectional configuration of an inner peripheral section of a tube body 21, which will be described later.

The tire 20 includes the tube body 21 inside which positive gas pressure is applied, and a tread 22 which is formed as an endless belt. Examples of the gas filled in the tube body 21 include air and nitrogen gas.
The tube body 21 is fit onto the support surface 12a of the rim 10 with central portions, in the tire width direction H, of the rim 10, the tube body 21 and the tread 22 being aligned with one another. The tread 22 is removably fit onto an outer side of the tube body 21. The tube body 21 is secured between the tread 22 and the rim 10 with an outer peripheral section thereof being in close contact with an inner circumferential surface of the tread 22 and an inner peripheral section thereof being in close contact with the support surface 12a of the rim 10 due to the positive gas pressure inside the tube body 21.

Here, the tube body 21 is formed in a doughnut shape with an airtight space A formed thereinside. The airtight space A extends continuously along the entire periphery of the tube body 21 and has a circular vertical cross-sectional configuration. The tube body 21 can be maintained at positive pressure by the air filled in the airtight space A. Both side portions 21a, in the tire width direction H, of the tube body 21 are not covered with the support surface 12a of the rim 10 and the tread 22, and thus are exposed to the outside.

The peripheral length, along the tire width direction H, of the inner peripheral section of the tube body 21 at a portion covered with the support surface 12a of the rim 10, and the peripheral length, along the tire width direction H, of the outer peripheral section of the tube body 21 at a portion covered with the tread 22 are the same. Thus, the peripheral lengths, along the tire width direction H, of the both side portions 21a of the tube body 21 exposed to the outside as described above are the same.

The tread 22 is made of vulcanized rubber obtained through vulcanization of natural rubber and/or a rubber composition. A reinforcing layer 22a constituted by a plurality of steel cords disposed in parallel is embedded along the entire periphery of the tread 22.

In the present embodiment, the tube body 21 is made of a thermoplastic material having a longitudinal elastic modulus of not less than 1.0 MPa and not more than 500 MPa. Examples of the thermoplastic material include a thermoplastic resin and a thermoplastic elastomer (TPE) having elasticity as that of rubber. In consideration of elasticity during travel (i.e., riding comfort) and formability during production, a thermoplastic elastomer is preferably used.
Examples of the thermoplastic elastomer include an amide thermoplastic elastomer (TPA), an ester thermoplastic elastomer (TPC), an olefin thermoplastic elastomer (TPO), a styrene thermoplastic elastomer (TPS), a urethane thermoplastic elastomer (TPU), a cross-linked thermoplastic rubber (TPV), and other thermoplastic elastomer (TPZ), which are prescribed in JIS K6418.
Examples of the thermoplastic resin include urethane resin, olefin resin, vinyl chloride resin and polyamide resin.
The thickness of the tube body 21 is, for example, about 0.5 mm to about 5.0 mm and the gas pressure applied inside the tube body 21 is, for example, about 50 kPa to about 500 kPa. Examples of vehicles to which the tire-rim assembly 1 will be mounted include motorcycles and cars less than 3t in total weight.
With the tube body 21 thinner than 0.5 mm, there is a possibility that pressure resistance and cut resistance might be insufficient. With the tube body 21 thicker than 5.0 mm, there is a possibility that the difference in stress produced in front and back surfaces might increase when the weight increases or a bending strain acts on the tube body 21, thereby impairing fatigue resistance.
With a gas pressure of lower than 50 kPa applied to the tube body 21, there is a possibility that the load bearing performance might be impaired. With a gas pressure of higher than 500 kPa applied to the tube body 21, there is a possibility that riding comfort and pressure resistance might be impaired.
First engaging portions 23 are provided in the outer peripheral section of the tube body 21. Second engaging portions 24 are provided on the inner circumferential surface of the tread 22. The first engaging portions 23 and the second engaging portions 24 can be engaged with each other to prevent relative misalignment of the tube body 21 with respect to the tread 22 in the tire width direction H.

The first engaging portions 23 provided in the outer peripheral section of the tube body 21 are projections protruding outward in the radial direction of the tire. The second engaging portions 24 provided on the inner circumferential surface of the tread 22 are recesses dented outward in the radial direction of the tire. The second engaging portions 24 are provided on the inner circumferential surface of the tread 22 at both sides in the tire width direction H. The first engaging portions 23 are provided in the outer peripheral section of the tube body 21 at portions corresponding to the second engaging portions 24 in the tire radial direction. The second engaging portions 24 are located inside both end edges of the tread 22 in the tire width direction H. The first engaging portions 23 are solid.

Third engaging portions 25 are provided on the support surface 12a of the rim 10. Fourth engaging portions 26 are provided in the inner peripheral section of the tube body 21. The third engaging portions 25 and the fourth engaging portions 26 can be engaged with each other to prevent relative misalignment of the tube body 21 with respect to the rim 10 in the tire width direction H.
The third engaging portions 25 provided on the rim 10 are recesses dented inward in the radial direction of the tire. The fourth engaging portions 26 provided in the inner peripheral section of the tube body 21 are projections protruding inward in the radial direction of the tire. The third engaging portions 25 are provided on the support surface 12a of the rim 10 at the central portion in the tire width direction H. The fourth engaging portions 26 are provided in the inner peripheral section of the tube body 21 at the central portion in the tire width direction H. The fourth engaging portions 26 are solid.

The plurality of first to fourth engaging portions 23 to 26 described above are disposed along the circumferential direction of the tire at certain intervals. The first to fourth engaging portions 23 to 26 are formed in elongated rectangular shapes along the circumferential direction of the tire when seen in a plan view, and have rectangular vertical cross-sectional configurations.
The first engaging portions 23 and the fourth engaging portions 26 provided in the tube body 21 are fit into the second engaging portions 24 provided in the tread 22 and the third engaging portions 25 provided in the rim 10, respectively, due to the positive gas pressure inside the tube body 21. In particular, each of the first engaging portions 23 is in close contact with an inner surface of the corresponding second engaging portions 24, and each of the fourth engaging portions 26 is in close contact with an inner surface of the corresponding third engaging portions 25 with no clearance left therebetween.

As described above, the tire 20 of the present embodiment is constituted of the tread 22 and the tube body 21, and the tube body 21 is made of a thermoplastic material. With this configuration, a tire of simplified structure can be provided, the manufacturing cost can be reduced, and the weight of the tire can be reduced. If no reinforcing member having organic fiber, steel cord or other material is embedded inside the tube body 21, the structure can be further simplified, the manufacturing cost can be further reduced, and the weight can be further reduced.

If no reinforcing member is embedded inside the tube body 21, there is no need to remove other members from the tube body 21 after the tube body and the tread 22 are separated from each other. The tube body 21 is made of a thermoplastic material. Thus, the tube body 21 can be re-molded only by heating and fusing. Thus, the tire 20 can be provided with excellent recycling efficiency.

Since the tread 22 is removably fit onto the outer side of the tube body 21, only one of the tread 22 and the tube body 21 can be replaced in the event of wear or deterioration. In this manner, efficient replacement can be achieved and the cost required for the replacement can be reduced.
If the tube body 21 is made of thermoplastic elastomer among thermoplastic materials, a decrease in the stiffness of the tire 20 can be avoided even if no reinforcing member is used. Thus, the practical usability can reliably be provided.

In the present embodiment, the first engaging portions 23 are provided in the outer peripheral section of the tube body 21 and the second engaging portions 24 are provided on the inner circumferential surface of the tread 22. As a result, the tendency of relative misalignment of the tube body 21 with respect to the tread 22 in the tire width direction H can be eliminated even when the tube body 21 and the tread 22 are constructed to be separated from each other as described above, and thus the practical usability can be reliably further provided.
The first engaging portions 23 and the second engaging portions 24 are thus provided. With this configuration, when the tread 22 is fit onto the outer side of the tube body 21, the relative position of the tread 22 with respect to the tube body 21 in the tire width direction H can be determined easily and highly accurately. Thus, the workability when assembling the rim or when assembling the tire 20 can be further improved.

The first engaging portions 23 provided in the tube body 21 are projections while the second engaging portions 24 provided in the tread 22 are recesses. With this configuration, forced entrance of the first engaging portions 23 into the second engaging portions 24 can be easily achieved due to expansion of the tube body 21 with the positive gas pressure and thus it is possible to securely engage the first engaging portions 23 and the second engaging portions 24 with each other.
In the present embodiment, the first engaging portions 23 are solid projections. Thus, dimensional variety of the first engaging portions 23 due to expansion of the tube body 21 with the positive gas pressure, such as a varying projection height from tube body 21 and a varying width, can be eliminated and the first engaging portions 23 can be made to reliably enter the second engaging portions 24.
The tread 22 is provided with the reinforcing layer 22a, and the tube body 21 is made of the thermoplastic material with a longitudinal elastic modulus of not less than 1.0 MPa and not more than 500 MPa. Thus, a decrease in the stiffness of the tire 20 when no reinforcing member is provided can be avoided reliably. Note that there is a possibility that the tube body 21 with a longitudinal elastic modulus of more than 500 MPa might reduce riding comfort.

According to the tire-rim assembly 1 of the present embodiment, the vertical cross-sectional configuration of the support surface 12a of the rim 10 is a circular arc which conforms to the vertical cross-sectional configuration of the inner peripheral section of the tube body 21. Thus, misalignment of the tube body 21 with respect to the rim 10 in the tire width direction H can be avoided. It is also possible to easily determine the position of the tube body 21 with respect to the rim 10 in the tire width direction H when the tube body 21 is fit onto the support surface 12a of the rim 10, thereby improving the workability when assembling the rim.

The third engaging portions 25 are provided on the support surface 12a of the rim 10 and the fourth engaging portions 26 are provided in the inner peripheral section of the tube body 21. Thus, even if a reinforcing member, such as a bead core, is eliminated, the tendency of misalignment of the tube body 21 with respect to the rim 10 in the tire width direction H can be eliminated, and thus the practical usability can be reliably further provided.
The third engaging portions 25 and the fourth engaging portions 26 are thus provided. It is thus possible to easily and highly accurately determine the position of the tube body 21 with respect to the rim 10 in the tire width direction H when the tube body 21 is fit onto the support surface 12a of the rim 10, thereby further improving the workability when assembling the rim.

In the present embodiment, the fourth engaging portions 26 provided in tube body 21 are projections while the third engaging portions 25 provided in the rim 10 are recesses. With this configuration, forced entrance of the fourth engaging portions 26 into the third engaging portions 25 can be easily achieved due to expansion of the tube body 21 with the positive gas pressure and thus it is possible to securely engage the fourth engaging portions 26 and the third engaging portions 25 with each other.

In the present embodiment, the fourth engaging portions 26 are solid projections. Thus, dimensional variety of the fourth engaging portions 26 due to expansion of the tube body 21 with the positive gas pressure, such as a varying projection height from tube body 21 and a varying width, can be eliminated and the fourth engaging portions 26 can be made to reliably enter the third engaging portions 25.
In the present embodiment, since the both side portions 21 a of the tube body 21 are exposed, the tread 22 can easily be assembled to or disassembled from the tube body 21.

The plurality of first to fourth engaging portions 23 to 26 described above are disposed along the circumferential direction of the tire at certain intervals. Thus, relative misalignment of the rim 10 with respect to the tube body 21 in the circumferential direction of the tire, and relative misalignment of the tube body 21 with respect to the tread 22 in the circumferential direction of the tire can also be avoided.

The plurality of first to fourth engaging portions 23 to 26 described above are disposed along the circumferential direction of the tire at certain intervals. In this manner, the relative position of the tread 22 with respect to the tube body 21 in the circumferential direction of the tire can be determined easily and highly accurately when the tread 22 is fit onto the outer side of the tube body 21. Further, the relative position of the tube body 21 with respect to the rim 10 in the circumferential direction of the tire can be determined easily and highly accurately when the tube body 21 is fit onto the support surface 12a of the rim 10.

With the configuration described above, it is possible to avoid relative misalignment of the rim 10, the tube body 21 and the tread 22 in the circumferential direction of the tire as well as in the tire width direction H. It is also possible to easily and highly accurately determine the relative positions of the rim 10, the tube body 21 and the tread 22 in the circumferential direction of the tire as well as in the tire width direction H. Thus, the above-described practical usability can be reliably further provided and the workability when assembling the rim can be improved.

It should be noted that the technical scope of the invention is not limited to the embodiments described above, and can be modified without departing from the scope of the invention.
Although two sets of engaging portions, i.e., the first engaging portions 23 and the second engaging portions 24, and the third engaging portions 25 and the fourth engaging portions 26, are provided in the above-described embodiment, only one or even none of these engaging portions may be provided. Arrangement positions and the number of the first engaging portions 23 and the second engaging portions 24, and the third engaging portions 25 and the fourth engaging portions 26 may be changed suitably.

Although the first engaging portions 23 and the fourth engaging portions 26 are solid projections, they may alternatively be hollow projections. Although these engaging portions 23 and 26 are projections and the second engaging portions 24 and the third engaging portions 25 recesses, the first engaging portions 23 and the fourth engaging portions 26 may alternatively be recesses and the second engaging portions 24 and the third engaging portions 25 may alternatively be projections.
Although the plurality of first to fourth engaging portions 23 to 26 are disposed along the circumferential direction of the tire at certain intervals, these engaging portions may alternatively be formed to extend over the entire periphery along the circumferential direction of the tire. Although the first to fourth engaging portions 23 to 26 are formed in elongated rectangular shapes along the circumferential direction of the tire when seen in a plan view, configurations of these engaging portions may be suitably changed to, for example, circular or polygonal shapes. Each vertical cross-sectional configuration of the first to fourth engaging portions 23 to 26 is not limited to the embodiment described above and may be suitably changed.

In place of the embodiment described above, the first engaging portions 23 and the second engaging portions 24 may be disposed at the central position in the tire width direction H as the third engaging portions 25 and the fourth engaging portions 26.
Although the reinforcing layer 22a is embedded in the tread 22, the reinforcing layer 22a is not necessarily provided.
Although the tread 22 in the embodiment described above is formed as an endless belt and is removably fit onto the outer side of the tube body 21, the tread may alternatively be formed integrally with the tube body 21 through vulcanization adhesion to the outer peripheral section of the tube body.

Next, verification tests related to the above-described operation effect will be described.
As Conventional Example 1, a pneumatic tire was employed in which a reinforcing member, such as a belt layer and a bead core, is embedded in vulcanized rubber. As Example 1, the tire 20 illustrated in FIGS. 1 and 2 was employed. The tire 20 was of the same size as that of the pneumatic tire of Conventional Example 1. The tube body 21 of Example 1 was made of an olefin thermoplastic elastomer.
As a result, the weight of the tire of Example 1 was reduced by about 30 percent as compared to that of Conventional Example 1. In Example 1, the time required for assembling the tire to the rim and for disassembling the tire from the rim was reduced significantly as compared to that of Conventional Example 1, and the tube body 21 and the tread 22 were easily separated. The tube body 21 was able to be recycled by heating, fusing and re-molding after being separated from the tread 22.

Next, as Comparative Example 1, a pneumatic tire as disclosed in Japanese Unexamined Patent Application, First Publication No. 2003-104008 was employed.
The pneumatic tire includes a tire framework member having a bead core embedded therein and a tread provided on an outer circumferential surface of the tire framework member, and the tire framework member was made of an olefin thermoplastic elastomer. Ten pneumatic tires of Comparative Example 1 and ten tires of Example 1 having the same size were prepared.
Each tire was assembled to a rim using a rim assembler, and the tire framework member of Comparative Example 1 and the tube body 21 of Example 1 were visually examined to confirm the existence of breakage.
It was found that all the ten pneumatic tires of Comparative Example 1 were damaged at portions around the bead core of the tire framework member. On the other hand, only one tire of Example 1 was broken in the tube body 21.

In the pneumatic tire of Comparative Example 1, a bead core is embedded inside the tire framework member. It is thus required to significantly deform the bead section forcibly during assembly of the rim. The thermoplastic material, on the other hand, have higher stiffness and lower elastic limit strain as compared to vulcanized rubber. Thus, in Comparative Example 1, the portion located near the bead core in the tire framework member is easily damaged. In the tire 20 of Example 1, on the other hand, no bead core is embedded in the tube body 21. In addition, the tube body 21 is made of a thermoplastic material. It is thus possible to deform the tube body 21 easily during assembly of the rim without applying greater force. Accordingly, in Example 1, the workability of the tire 20 can be improved and the breakage of the tube body 21 can be avoided.

### <Second Embodiment>

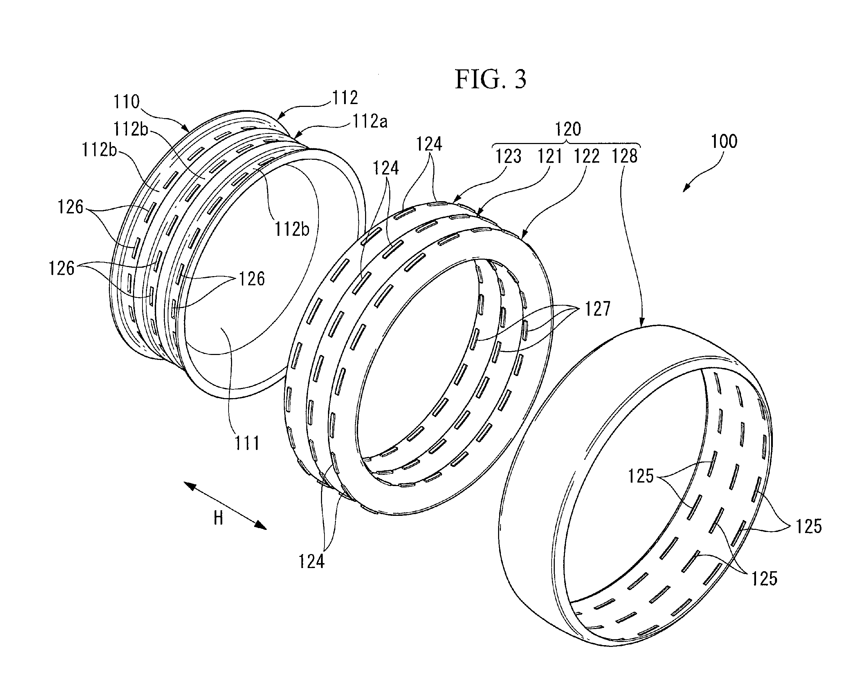

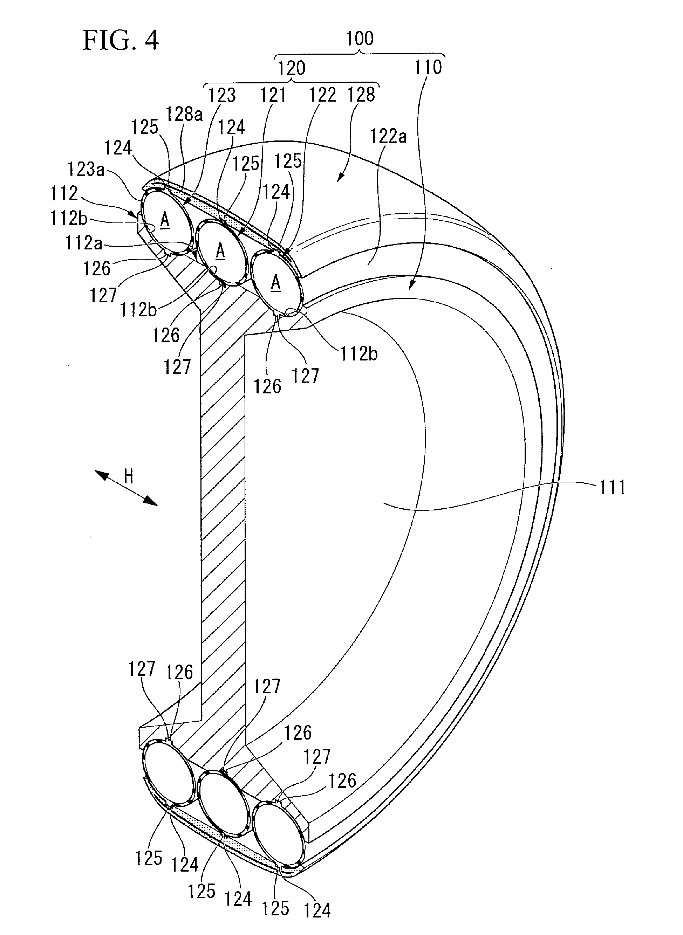

Hereinafter, a second embodiment of the tire-rim assembly according to the invention will be described with reference to FIGS. 3 and 4.

A tire-rim assembly 1 includes a disc-shaped rim 110 and a tire 120 mounted on a support portion (outer peripheral section) 112 of the rim 110 which will be described later. The rim 110 and the tire 120 are disposed coaxially with a common shaft extending along a tire width direction H.
The rim 110 includes a disc-shaped rim body 111 and the flange-shaped support portion 112 connected to an outer circumferential surface of the rim body 111. The support portion 112 protrudes outward in the tire width direction H from both front and back surfaces of the rim body 111. The rim body 111 and the support portion 112 are integrally made of a metallic material.
Here, a surface of the support portion 112 facing outward in the radial direction of the tire is defined as a support surface 112a on which inner peripheral sections of later-described tube bodies 121 to 123 are supported.

The tire 120 includes the tube bodies 121 to 123 inside which positive gas pressure is applied, and a tread 128 which is formed as an endless belt. Examples of the gas filled in the tube bodies 121 to 123 include air and nitrogen gas.
The tube bodies 121 to 123 are fit onto the support surface 112a of the rim 110 and the tread 128 is removably fit onto the outer side of the tube bodies 121 to 123. Here, each of the tube bodies 121 to 123 is formed in a doughnut shape with an airtight space A formed thereinside. The airtight space A extends continuously along the entire periphery of each of the tube bodies 121 to 123 and has a circular vertical cross-sectional configuration taken along the tire width direction H. The tube bodies 121 to 123 can be maintained at positive pressure by the air filled in the airtight space A. The tube bodies 121 to 123 are secured between the tread 128 and the rim 110 with outer peripheral sections thereof being in close contact with an inner circumferential surface of the tread 128 and inner peripheral sections thereof being in close contact with the support surface 112a of the rim 110 due to the positive gas pressure inside the tube bodies 121 to 123.

In the present embodiment, the plurality of tube bodies 121 to 123 are arranged in the tire width direction H and fit onto the support surface 112a of the rim 110. In the illustrated example, three tube bodies 121 to 123 are arranged in the tire width direction H and fit onto the support surface 112a of the rim 110. The tube bodies 121 to 123 are of the same shape and size. These tube bodies 121 to 123 are fit onto the support surface 112a of the rim 110 at certain intervals in the tire width direction H. In the illustrated example, the interval is the same as the thickness of the tube bodies 121 to 123.
The tread 128 is removably fit over the outer sides of the plurality of tube bodies 121 to 123 along the tire width direction H.

In the second tube body 122 and the third tube body 123 located at both sides in the tire width direction H among the plurality of tube bodies 121 to 123, outside portions 122a and 123a located outside in the tire width direction H are not covered with the support surface 112a and the tread 128 of the rim 110 and thus are exposed to the outside. The peripheral lengths of the outside portions 122a and 123a of the second tube body 122 and the third tube body 123 which are exposed to the outside are the same.

The tread 128 is made of vulcanized rubber obtained through vulcanization of natural rubber and/or a rubber composition. A reinforcing layer 128a constituted by a plurality of steel cords disposed in parallel is embedded along the entire periphery of the tread 128.

In the present embodiment, the tube bodies 121 to 123 are made of a thermoplastic material having a longitudinal elastic modulus of not less than 1.0 MPa and not more than 500 MPa. Examples of the thermoplastic material include, a thermoplastic resin and a thermoplastic elastomer (TPE) having elasticity as that of rubber. In consideration of elasticity during travel (i.e., riding comfort) and formability during production, a thermoplastic elastomer is preferably used.
Examples of the thermoplastic elastomer include an amide thermoplastic elastomer (TPA), an ester thermoplastic elastomer (TPC), an olefin thermoplastic elastomer (TPO), a styrene thermoplastic elastomer (TPS), a urethane thermoplastic elastomer (TPU), a cross-linked thermoplastic rubber (TPV), and another thermoplastic elastomer (TPZ), which are prescribed in JIS K6418.
Examples of the thermoplastic resin include urethane resin, olefin resin, vinyl chloride resin and polyamide resin.
The thickness of the tube bodies 121 to 123 is, for example, about 0.5 mm to about 5.0 mm and the gas pressure applied inside the tube bodies 121 to 123 is, for example, about 50 kPa to about 500 kPa. Examples of vehicles to which the tire-rim assembly 1 will be mounted include motorcycles and cars less than 3t in total weight.
With the tube bodies 121 to 123 thinner than 0.5 mm, there is a possibility that pressure resistance and cut resistance might be insufficient. With the tube bodies 121 to 123 thicker than 5.0 mm, there is a possibility that the difference in stress produced in front and back surfaces might increase when the weight increases or a bending strain acts on the tube bodies 121 to 123, thereby impairing fatigue resistance.
With a gas pressure of lower than 50 kPa applied to the tube bodies 121 to 123, there is a possibility that the load bearing performance might be impaired. With a gas pressure of higher than 500 kPa applied to the tube bodies 121 to 123, there is a possibility that riding comfort and pressure resistance might be impaired.
Here, first engaging portions 124 are provided in each of the outer peripheral sections of the plurality of tube bodies 121 to 123. Second engaging portions 125 are provided on the inner circumferential surface of the tread 128. The first engaging portions 124 and the second engaging portions 125 can be engaged with each other to prevent relative misalignment of the tube bodies 121 to 123 with respect to the tread 128 in the tire width direction H.

The first engaging portions 124 provided in the outer peripheral sections of the tube bodies 121 to 123 are projections protruding outward in the radial direction of the tire. The first engaging portions 124 are provided in each of the outer peripheral sections of the tube bodies 121 to 123 at the central portion in the tire width direction H. The first engaging portions 124 are solid.
The second engaging portions 125 provided on the inner circumferential surface of the tread 128 are recesses dented outward in the radial direction of the tire. The second engaging portions 125 are provided on the inner circumferential surface of the tread 128 at the central portion and both sides in the tire width direction H.

Here, a plurality of recessed portions 112b are formed on the support surface 112a of the rim 110 at certain intervals in the tire width direction H. Each of the recessed portions 112b is formed such that the vertical cross-sectional configuration is a circular arc which conforms to the vertical cross-sectional configuration of the inner peripheral section of each of the tube bodies 121 to 123. One of the recessed portions 112b is formed on the support surface 112a at the central portion in the tire width direction H, and the other two recessed portions 112b are formed on the support surface 112a at both sides in the tire width direction H. The other two recessed portions 112b among the three recessed portions 112b are located inside both end edges of the support surface 112a in the tire width direction H. The plurality of tube bodies 121 to 123 are fit onto each of these recessed portions 112b.

Third engaging portions 126 are provided in these recessed portions 112b. Fourth engaging portions 127 are provided in the inner peripheral section of each of the tube bodies 121 to 123. The third engaging portions 126 and the fourth engaging portions 127 can be engaged with each other to prevent relative misalignment of the tube bodies 121 to 123 with respect to the rim 110 in the tire width direction H.
The third engaging portions 126 provided on the recessed portion 112b are recesses dented inward in the radial direction of the tire. The third engaging portions 126 are provided at the central portion of each of the recessed portions 112b in the tire width direction H.
The fourth engaging portions 127 provided in the inner peripheral section of the tube bodies 121 to 123 are projections protruding inward in the radial direction of the tire. The fourth engaging portions 127 are provided in the inner peripheral section of the tube bodies 121 to 123 at the central portion in the tire width direction H. The fourth engaging portions 127 are solid.

The plurality of first to fourth engaging portions 124 to 127 described above are disposed along the circumferential direction of the tire at certain intervals. The first to fourth engaging portions 124 to 127 are formed in elongated rectangular shapes along the circumferential direction of the tire when seen in a plan view and have vertical cross-sectional configurations.
The first engaging portions 124 and the fourth engaging portions 127 provided in the tube bodies 121 to 123 are fit into the second engaging portions 125 provided in the tread 128 and the third engaging portions 126 provided on the support surface 112a of the rim 110, respectively, due to the positive gas pressure inside the tube bodies 121 to 123. In particular, each of the first engaging portions 124 is in close contact with an inner surface of the corresponding second engaging portion 125, and each of the fourth engaging portions 127 is in close contact with an inner surface of the corresponding third engaging portion 126 with no clearance left therebetween.

As described above, the tire 120 of the present embodiment is constituted of the tread 128 and the tube bodies 121 to 123, and the tube bodies 121 to 123 are made of a thermoplastic material. With this configuration, a tire of simplified structure can be provided, the manufacturing cost can be reduced, and the weight of the tire can be reduced. If no reinforcing member having organic fiber, steel cord or other material is embedded inside the tube bodies 121 to 123, the structure can be further simplified, the manufacturing cost can be further reduced, and the weight can be further reduced.

If no reinforcing member is embedded inside the tube bodies 121 to 123, there is no need to remove other members from the tube bodies 121 to 123 after the tube bodies 121 to 123 and the tread 128 are separated from each other. The tube bodies 121 to 123 are made of a thermoplastic material. Thus, the tube bodies 121 to 123 can be re-molded only by heating and fusing. Thus, the tire 120 can be provided with excellent recycling efficiency.

Since the tread 128 is removably fit onto the outer sides of the tube bodies 121 to 123, only one of the tread 128 and the tube bodies 121 to 123 can be replaced in the event of wear or deterioration. In this manner, efficient replacement can be achieved and the cost required for the replacement can be reduced.

If the tube bodies 121 to 123 are made of thermoplastic elastomer among thermoplastic materials, a decrease in the stiffness of the tire 120 can be avoided even if no reinforcing member is used. Thus, the practical usability can reliably be provided.

Since the plurality of tube bodies 121 to 123 are provided, in the event that some of these tube bodies 121 to 123 are punctured due to, for example, vibration during travel or a locally applied large external force, the remaining tube bodies can support the load of the vehicle and thus the vehicle can continuously travel for a certain distance. That is, run-flat travel of the tire can be achieved.
In recent years, studies have been made on forming tires from thermoplastic materials to meet the demand for low-fuel consumption tires. There is concern about decreases in durability, such as an easy occurrence of puncture, about these lightweight tires. In the present embodiment, however, since run-flat travel can be achieved as described above, safety is secured reliably.

In the present embodiment, the plurality of tube bodies 121 to 123 are fit onto the support surface 112a (i.e., the outer peripheral section 112) of the rim 110 at certain intervals in the tire width direction H and the adjacent tube bodies 121 to 123 are not in contact with each other in the tire width direction H. Thus, it is possible to avoid wear of these tube bodies 121 to 123 due to vibration during travel and thus the durability of the tube bodies 121 to 123 can be excellent.

In the present embodiment, the first engaging portions 124 are provided in the outer peripheral section of each of the tube bodies 121 to 123 and the second engaging portions 125 are provided on the inner circumferential surface of the tread 128. Thus, the tendency of misalignment of the tube bodies 121 to 123 with respect to the tread 128 in the tire width direction H can be eliminated even when the tube bodies 121 to 123 and the tread 128 are constructed to be separated from each other as described above. Accordingly, the practical usability can be reliably further provided and it is possible to prevent mutual contact between adjacent tube bodies 121 to 123 arranged in the tire width direction H, in which clearance between the tube bodies 121 to 123 is eliminated, due to vibration during travel.
With the thus-provided first engaging portions 124 and the second engaging portions 125, when the tread 128 is fit onto the outer sides of the tube bodies 121 to 123, the relative positions of the tread 128 and the tube bodies 121 to 123 in the tire width direction H can be determined easily and highly accurately. Thus, the workability when assembling the rim or when assembling the tire 120 can be further improved.

The first engaging portions 124 provided in tube bodies 121 to 123 are projections while the second engaging portions 125 provided in the tread 128 are recesses. With this configuration, forced entrance of the first engaging portions 124 into the second engaging portions 125 can be easily achieved due to expansion of the tube bodies 121 to 123 with the positive gas pressure and thus it is possible to securely engage the first engaging portions 124 and the second engaging portions 125 with each other.
In the present embodiment, the first engaging portions 124 are solid projections. Thus, dimensional variety of the first engaging portions 124 due to expansion of the tube bodies 121 to 123 with the positive gas pressure, such as a varying projection height from tube bodies 121 to 123 and a varying width, can be eliminated and the first engaging portions 124 can be made to reliably enter the second engaging portions 125.
The tread 128 is provided with the reinforcing layer 128a and the tube bodies 121 to 123 are made of the thermoplastic material with a longitudinal elastic modulus of not less than 1.0 MPa and not more than 500 MPa. Thus, a decrease in the stiffness of the tire 120 when no reinforcing member is provided can be avoided reliably. Note that there is a possibility that the tube bodies 121 to 123 with a longitudinal elastic modulus of more than 500 MPa might reduce riding comfort.

According to the tire-rim assembly 1 of the present embodiment, since the plurality of recessed portions 112b are formed in the support surface 112a of the rim 110, misalignment of the tube bodies 121 to 123 with respect to the rim 110 in the tire width direction H can be avoided. Thus, clearance between adjacent tube bodies 121 to 123 in the tire width direction H can be reliably maintained over a long period of time. It is also possible, when the tube bodies 121 to 123 are fit onto the recessed portions 112b, the positions of the tube bodies 121 to 123 with respect to the rim 110 in the tire width direction H can be determined easily, thereby improving the workability when assembling the rim.

The third engaging portions 126 are provided on the support surface 112a of the rim 110 and the fourth engaging portions 127 are provided in the inner peripheral section of each of the tube bodies 121 to 123. Thus, even if a reinforcing member, such as a bead core, is eliminated, the tendency of misalignment of the tube bodies 121 to 123 with respect to the rim 110 in the tire width direction H can be eliminated. Accordingly, the practical usability can be reliably further provided and clearance between adjacent tube bodies 121 to 123 in the tire width direction H can be maintained highly accurately over a long period of time.
The third engaging portions 126 and the fourth engaging portions 127 are thus provided. It is therefore possible to easily and highly accurately determine the positions of the tube bodies 121 to 123 with respect to the rim 110 in the tire width direction H when the tube bodies 121 to 123 are fit into the recessed portions 112b of the support surface 112a, thereby further improving the workability when assembling the rim.

In the present embodiment, the fourth engaging portions 127 provided in the tube bodies 121 to 123 are projections while the third engaging portions 126 provided in the recessed portions 112b of the support surface 112a are recesses. With this configuration, forced entrance of the fourth engaging portions 127 into the third engaging portions 126 can be easily achieved due to expansion of the tube bodies 121 to 123 with the positive gas pressure and thus it is possible to securely engage the fourth engaging portions 127 and the third engaging portions 126 with each other.

In the present embodiment, the fourth engaging portions 127 are solid projections. Thus, dimensional variety of the fourth engaging portions 127 due to expansion of the tube bodies 121 to 123 with the positive gas pressure, such as a varying projection height from tube bodies 121 to 123 and a varying width, can be eliminated and the fourth engaging portions 127 can be made to reliably enter the third engaging portions 126.
In the present embodiment, since the outside portions 122a and 123a of the second tube body 122 and the third tube body 123 located outside in the tire width direction H are exposed, the tread 128 can be easily assembled to and disassembled from the tube bodies 121 to 123.

The plurality of first to fourth engaging portions 124 to 127 described above are disposed along the circumferential direction of the tire at certain intervals. Thus, relative misalignment of the rim 110 with respect to the tube bodies 121 to 123 in the circumferential direction of the tire and relative misalignment of the tube bodies 121 to 123 with respect to the tread 128 in the circumferential direction of the tire can also be avoided.

The plurality of first to fourth engaging portions 124 to 127 described above are disposed along the circumferential direction of the tire at certain intervals. In this manner, the relative position of the tread 128 with respect to the tube bodies 121 to 123 in the circumferential direction of the tire can be determined easily and highly accurately when the tread 128 is fit onto the outer side of the tube bodies 121 to 123. Further, the relative positions of the tube bodies 121 to 123 with respect to the rim 110 in the circumferential direction of the tire can be determined easily and highly accurately when the tube bodies 121 to 123 are fit onto the support surface 112a of the rim 110.

With the configuration described above, it is possible to avoid relative misalignment of the rim 110, the tube bodies 121 to 123 and the tread 128 in the circumferential direction of the tire as well as in the tire width direction H. It is also possible to easily and highly accurately determine the relative positions of the rim 110, the tube bodies 121 to 123 and the tread 128 along the circumferential direction of the tire as well as in the tire width direction H. Thus, the above-described practical usability can be reliably further provided and the workability when assembling the rim can be improved.

It should be noted that the technical scope of the invention is not limited to the embodiments described above but can be modified without departing from the scope of the invention.
Although two sets of engaging portions, i.e., the first engaging portions 124 and the second engaging portions 125, and the third engaging portions 126 and the fourth engaging portions 127, are provided in the above-described embodiment, only one or even none of these engaging portions may be provided. Arrangement positions and the number of the first engaging portions 124 and the second engaging portions 125, and the third engaging portions 126 and the fourth engaging portions 127 may be changed suitably.

Although the first engaging portion 124 and the fourth engaging portion 127 are solid projections, they may alternatively be hollow projections. Although these engaging portion 124 and 127 are projections and the second engaging portion 125 and the third engaging portion 126 recesses, the first engaging portion 124 and the fourth engaging portion 127 may alternatively be recesses and the second engaging portion 125 and the third engaging portion 126 may alternatively be projections.
Although the plurality of first to fourth engaging portions 124 to 127 are disposed along the circumferential direction of the tire at certain intervals, these engaging portions may alternatively be formed to extend over the entire periphery along the circumferential direction of the tire. Although the first to fourth engaging portions 124 to 127 are formed in elongated rectangular shapes along the circumferential direction of the tire when seen in a plan view, configurations of these engaging portions may be suitably changed to, for example, circular or polygonal shapes. Each vertical cross-sectional configuration of the first to fourth engaging portions 124 to 127 is not limited to the embodiment described above and may be suitably changed.

Although the reinforcing layer 128a is embedded in the tread 128, the reinforcing layer 128a is not necessarily provided.
The number of the tube bodies 121 to 123 to be fit onto the support portion 112 of the rim 110 is not limited to that of the embodiment. For example, two, or four numbers of tube bodies may be provided. Dimensions, such as the thickness and the outer diameter, of the tube bodies may be the same as or different from each other.
It is not necessary to provide clearance between the tube bodies 121 to 123 which are adjacent to one another in the tire width direction H.
Although the tread 128 in the embodiment described above is formed as an endless belt and is removably fit onto the outer side of the tube bodies 121 to 123, the tread may alternatively be formed integrally with the tube bodies 121 to 123 through vulcanization adhesion to the outer peripheral sections of the tube bodies.

Next, verification tests related to the above-described operation effect will be described.
As Conventional Example 2, a pneumatic tire was employed in which a reinforcing member, such as a belt layer and a bead core, is embedded in vulcanized rubber. As Example 2, the tire 120 illustrated in FIGS. 3 and 4 was employed. The tire 120 was of the same size as that of the pneumatic tire of Conventional Example 2. The tube bodies 121 to 123 of Example 2 were made of an olefin thermoplastic elastomer.
As a result, the weight of the tire of Example 2 was reduced by about 40 percent as compared to that of Conventional Example 2. In Example 2, the time required for assembling the tire to the rim and for disassembling the tire from the rim was reduced significantly as compared to that of Conventional Example 2, and the tube bodies 121 to 123 and the tread 128 were easily separated. The tube bodies 121 to 123 were able to be recycled by heating, fusing and re-molding after being separated from the tread 128. In the event that one of these tube bodies 121 to 123 is punctured, travelling was able to be continued for a certain distance.

Next, the tire 120 illustrated in FIGS. 3 and 4 was employed as Example 3. A tire in which the tube bodies 121 to 123 adjacent to one another in the tire width direction H are in contact with each other with no clearance left therebetween was employed as Comparative Example 2. Each of these tires was mounted on a vehicle and was travelled at a constant speed of 60 km/h. Travel distance at which the tire broke was measured.
It was found that, when the tire of Comparative Example 2 was mounted, the contact portion between the tube bodies in the tire width direction H was broken. It was also found that, when the tire of Example 3 was mounted, the tread 128 was broken without damaging the tube bodies 121 to 123, and the travel distance was 5.4 times longer than the case in which the tire of Comparative Example 2 was mounted.

### INDUSTRIAL APPLICABILITY

A tire and a tire-rim assembly which have simplified structures and improved workability when assembling or disassembling the rim are provided. The tire and the tire-rim assembly can be replaced efficiently and have excellent recycling efficiency.

## Claims

1. A tire adapted to be mounted on a rim, the tire comprising:
a tube body which is made of a thermoplastic material and is adapted to be fit on an outer peripheral section of the rim; and
a tread provided in an outer side of the tube body,
wherein the tube body is fixed to the outer peripheral section of the rim in a close contact manner with positive gas pressure inside the tube body.

2. The tire according to claim 1, wherein the tread is formed as an endless belt and is removably fit onto the outer side of the tube body.

3. The tire according to claim 2, wherein:
a first engaging portion is provided in an outer peripheral section of the tube body;
a second engaging portion is provided in an inner circumferential surface of the tread; and
the first engaging portion and the second engaging portion are adapted to be engaged with each other to prevent relative misalignment of the tube body with respect to the tread in at least a width direction of the tire.

4. The tire according to claim 3, wherein:
the first engaging portion provided in the tube body is a projection and the second engaging portion provided in the tread is a recess; and
the first engaging portion is fit into the second engaging portion with positive gas pressure inside the tube body.

5. The tire according to claim 1, wherein the tread includes a reinforcing layer.

6. The tire according to claim 1, wherein the tube body is made of a thermoplastic material having a longitudinal elastic modulus of not less than 1.0 MPa and not more than 500 MPa.

7. A tire-rim assembly comprising:
a rim; and
the tire according to claim 1 which is mounted on the rim, wherein
a vertical cross-sectional configuration, taken along the width direction of the tire, of a support surface of an outer peripheral section of the rim on which an inner peripheral section of the tube body is supported is a circular arc shape which conforms to a vertical cross-sectional configuration of the inner peripheral section of the tube body.

8. The tire-rim assembly according to claim 7, wherein:
a third engaging portion is provided in the support surface of the rim;
a fourth engaging portion is provided in the inner peripheral section of the tube body; and
the third engaging portion and the fourth engaging portion are adapted to be engaged with each other to prevent misalignment of the tube body with respect to the rim in at least a width direction of the tire.

9. The tire-rim assembly according to claim 8, wherein:
the fourth engaging portion provided in the tube body is a projection and the third engaging portion provided in the rim is a recess; and
the fourth engaging portion is fit into the third engaging portion with positive gas pressure inside the tube body.

10. The tire according to claim 1, wherein:
a plurality of tube bodies are provided so as to be arranged in the width direction of the tire; and
the tread is provided over the outer sides of the plurality of tube bodies in a width direction of the tire.

11. The tire according to claim 10, wherein the plurality of tube bodies are fit onto the outer peripheral section of the rim at certain intervals in the width direction of the tire.

12. The tire according to claim 10, wherein the tread is formed as an endless belt and is removably fit onto the outer sides of the plurality of tube bodies.

13. The tire according to claim 12, wherein:
first engaging portions are provided on outer peripheral sections of the plurality of tube bodies;
second engaging portions are provided on an inner circumferential surface of the tread; and
the first engaging portions and the second engaging portions are adapted to be engaged with each other to prevent relative misalignment of the plurality of tube bodies with respect to the tread in at least the width direction of the tire.

14. The tire according to claim 13, wherein:
the first engaging portions provided in the plurality of tube bodies are projections and the second engaging portions provided in the tread are recesses; and
the first engaging portions are fit into the second engaging portions with positive gas pressure inside the plurality of tube bodies.

15. The tire according to claim 10, wherein the tread includes a reinforcing layer.

16. The tire according to claim 10, wherein the plurality of tube bodies are made of a thermoplastic material having a longitudinal elastic modulus of not less than 1.0 MPa and not more than 500 MPa.

17. A tire-rim assembly comprising:
a rim; and
the tire according to claim 10 which is mounted on the rim, wherein:
a plurality of recessed portions are formed on a support surface of an outer peripheral section of the rim on which inner peripheral sections of the plurality of tube bodies are supported, the plurality of recessed portions being arranged in the width direction of the tire, and having vertical cross-sectional configurations, taken along the width direction of the tire, which conform to vertical cross-sectional configurations of the inner peripheral sections of the plurality of tube bodies; and
the plurality of tube bodies are fit into the plurality of recessed portions, respectively.

18. The tire-rim assembly according to claim 17, wherein:
third engaging portions are provided in each of the plurality of recessed portions;
fourth engaging portions are provided in each of the inner peripheral sections of the plurality of tube bodies; and
the third engaging portions and the fourth engaging portions are adapted to be engaged with each other to prevent relative misalignment of the plurality of tube bodies with respect to the rim in at least the width direction of the tire.

19. The tire-rim assembly according to claim 18, wherein:
the fourth engaging portions provided in the plurality of tube bodies are projections and the third engaging portions provided in the plurality of recessed portions are recesses; and
the fourth engaging portions are fit into the third engaging portions with positive gas pressure inside the plurality of tube bodies.
